# EUROPÄISCHE PATENTSCHRIFT

(11) **EP 1 199 563 B1**
(45) Veröffentlichungstag und Bekanntmachung des Hinweises auf die Patenterteilung: **29.03.2006**
(21) Anmeldenummer: 01124685.7
(22) Anmeldetag: 16.10.2001
(51) Int. Cl.: G01N 13/00, C09D 11/00

(54) **Testtinte zum Auftragen auf ein Werkstück zur Bestimmung von dessen Oberflächeneigenschaften**
Test ink for application to a work piece for the determination of its surface characteristics
Encre de test pour être appliqué sur une pièce pour la détermination de ses caractéristiques de surface

(30) Priorität: 16.10.2000 DE 20017740 U
(43) Veröffentlichungstag der Anmeldung: 24.04.2002
(73) Patentinhaber: Hill GmbH, 75173 Pforzheim (DE)
(72) Erfinder: Wimberg,Matthias, 76137 Karlsruhe (DE)
(74) Vertreter: Reinhardt, Harry

(56) Entgegenhaltungen:
- EP-A- 0 692 527
- US-A- 4 694 685
- US-A- 6 099 627
- MUNDO CHR ET AL: "Droplet-wall collisions: experimental studies of the deformation and breakup process" INT J MULTIPHASE FLOW;INTERNATIONAL JOURNAL OF MULTIPHASE FLOW APR 1995 PERGAMON PRESS INC, TARRYTOWN, NY, USA, Bd. 21, Nr. 2, April 1995 (1995-04), Seiten 151-173, XP002246312
- ASTM: "D 2578-99a : Standard Test Method for Wetting Tension of Polyethylene and Polypropylene Films" August 1999 (1999-08) , ASTM INTERNATIONAL , USA XP002246313 * das ganze Dokument *

## Beschreibung

### Gebiet der Erfindung

Die Erfindung betrifft Testtinten aus mindestens zwei Komponenten unterschiedlicher Oberflächenspannung, insbesondere zum Auftragen auf Werkstücke zur Bestimmung von deren Oberflächeneigenschaften.

### Stand der Technik

Testtinten werden in der Oberflächentechnik sowohl in der Produktion wie auch in der Qualitätskontrolle eingesetzt, um schnell und zuverlässig die Oberflächenspannung eines Substrates und damit die Güte einer Vorbehandlungstechnik zu ermitteln. Üblicherweise werden dazu Testtinten nach DIN 53364 verwendet. Diese Tinten sind nach der GStVO als giftig eingestuft und stellen somit ein gesundheitliches Risiko für den Anwender dar.

Die Oberflächenspannung bzw. die spezifische Oberflächenenergie ist die Menge an Energie, die aufgebracht werden muss, um die Oberfläche einer Flüssigkeit oder eines Festkörpers um ein bestimmtes Maß zu erhöhen. Sie wird gemessen in mN/m (Milli-Newton pro Meter). Sie wird für Flüssigkeiten in der Regel mit Hilfe eines Kraftmesssystems, wie z.B. einer Ringwaage durchgeführt. Die Oberflächenspannung korreliert ähnlich wie die Viskosität mit den inneren Anziehungskräften einer Substanz. Hier handelt es sich vor allem um elektrostatische Anziehungskräfte, Dipol- und Van-der-Vaals-Wechselwirkungen. Im Gegensatz zur Viskosität handelt es sich hier um eine weitestgehend statische Größe. Um die Oberflächenspannung eines Festkörpers zu bestimmen, wird üblicherweise die Randwinkelrnethode verwendet. Ein Tropfen einer Flüssigkeit mit definierter Oberflächenspannung wird auf den Festkörper aufgegeben. Je nach Oberflächenspannung bildet sich zwischen dem Tropfen und des Festkörpers ein Randwinkel aus.

In der industriellen Anwendung werden Oberflächen von Substraten verklebt, kaschiert, beschäumt, bedruckt, lackiert, galvanisiert, gelötet etc. Viele Metall- und Kunststoffoberflächen, die sich im Herstellungsprozess befinden, sind jedoch nicht dauerhaft verkleb-, bedruck- oder anders mit anderen Stoffen verbindbar. Um z.B. die Oberfläche mit Farbe oder der Klebstoff haftend, also dauerhaft benetzen zu können, wird die Oberfläche des Substrates chemisch (z.B. mit Primem) oder physikalisch (z.B. durch Gasbeflammung) unter Veränderung der Oberflächenenergie des Substrates vorbehandelt. Die Oberflächenspannung eines Festkörpers ist ein Maß für die Benetzbarkehit und Haftfähigkeit von Farben, Lacken und Klebstoffen. Ab einer bestimmten Oberflächenspannung, die von dem Material und der Vorbehandlung abhängt, ist Benetzung und Haftung zu erwarten.

Da die Randwinkelmessmethode sehr apparatur und zeitaufwendig ist, hat sich in der Praxis die Bestimmung der Oberflächenspannung mittels der Benetzungsfähigkeit von Testtinten gemäß DIN-Norm 53364 durchgesetzt. Dazu werden nacheinander verschiedene Testtinten mit definierter und ansteigender Abstufung der Oberflächenspannung mittels eines Pinsels, oder seltener mittels eines Stiftes, dünn auf die Oberfläche aufgetragen. Hat die Oberfläche eines Substrates beispielsweise die Oberflächenenergie von 41 mN/m, werden Testtinten mit einer Oberflächenenergie bis zu 41 mN/m die Oberfläche benetzen und die mit einer Oberflächenspannung größer als 41 mN/m abperlen und sich zusammenziehen. In der DIN 53364 wird die Herstellung von Tinten aus Diethylenglykolmonoethylether (Oberflächenspannungswert 30 mN/m) und Formamid (Oberflächenspannungswert 58 mN/m) beschrieben. Der Messbereich reicht von 30 bis 58 mN/m. So hat z.B. eine Tintenmischung mit 14 % Diethylenglykolmonoethylether und 86 % Formamid eine Oberflächenspannung von 48 mN/m. Die DIN-Tinten haben sich in der Praxis durchgesetzt.

Eine Serie von Testtinten zur Messung von Oberflächenspannung ist auch aus der US-A 4,694,685 bekannt. Bei dem dort verwendeten physikalischen Prinzip wird ein fest eingestelltes Gemisch von 45 % Ethylenglykol und 55 % Wasser hergestellt, welches eine Oberflächenspannung von 56 mN/m aufweist. Eine Veränderung des Oberflächenspannungswerts wird sodann durch Zugabe eines nichtionischen Tensids in Mengen von 0,001 -1,5 % erzielt.

Zum Zeitpunkt der Erstellung der DIN-Norm waren noch nicht alle toxischen Eigenschaften dieser Stoffe bekannt. Erst seit jüngerer Zeit stellte sich heraus, dass beide Substanzen fruchtschädigend sind, und Diethylenglykolmonoethylether zusätzlich als fortpflanzungsbeeinträchtigend einzustufen ist. Beide Stoffe sind nach deutschen Gefahrstoffrecht als "giftig" eingestuft, und mit gemäß den jeweiligen Sicherheitsdatenblättem dem entsprechendem Totenkopfsymbol zu kennzeichnen.

Der offene Umgang dieser Chemikalien, wie er bei der Oberflächen prüfung nach DIN 53364 erfolgt, ist folglich als bedenklich anzusehen. Aufnahme durch die Atmungsorgane und/oder Haut sind relativ leicht möglich, zum einen weil durch die Arbeit mitten im Produktionsprozess keine entsprechenden Absaugeinrichtungen installiert werden und zum anderen weil wegen der feinmechanischen Arbeit nicht immer Schutzhandschuhe getragen werden.

Es wurde bereits der Versuch unternommen, aus toxikologischer Sicht zumindest etwas unbedenklichere Testtinten zu vertreiben. Es handelt sich dabei um Stifte, in denen Tinten, bestehend aus 1-Methoxy-2-pentanol und Diethylenglykol, eingefüllt sind. Der Messbereich ist im Vergleich zu den DIN-Tinten deutlich kleiner und reicht von 30 bis 44 mN/m. Höhere Werte als 44 mN/m konnten hier offensichtlich nicht dargestellt werden. In der Industrie stellt jedoch der Wert 48 mN/m eine wichtige Verarbeitungsgrenze dar. Tinten dieses Werts sind deswegen gefragt. Aus diesem Grund werden sogenannte Standardsätze an Testtinten mit festgelegten Abstufungen an Oberflächenspannungswerten in der Regel bis zu einem Wert von mindestens 48 mN/m angeboten. Auch diese Tinten sind jedoch nach Gefahrstoffrecht kennzeichnungspflichtig. Sie sind nach dem Sicherheitsdatenblatt als reizend einzustufen.

Ausgehend von diesem Stand der Technik liegt der vorliegenden Erfindung die Aufgabe zugrunde, eine Prüftinte zu schaffen, die die genannten Nachteile der DIN-Tinte überwindet. Diese Aufgabe wird erfindungsgemäß durch eine Testtinte mit den Merkmalen des Anspruches 1 gelöst.

Bevorzugte Aus- bzw. Weiterbildungen der erfindungsgemäßen Testtinte sind in den Unteransprüchen dargestellt. Der Wortlaut sämtlicher Ansprüche wird hiermit durch Bezugnahme zum Inhalt der Beschreibung gemacht.

Die erfindungsgemäße Testtinte kommt den DIN-Tinten möglichst nahe, hat den bisher verwendeten Stoffen gegenüber jedoch den Vorteil, dass sie nach GStVO und europäischem Gefahrstoffrecht kennzeichnungsfrei sind. Um Zulassungsverfahren zu vermeiden bzw. zu erleichtern, sind die neuen Stoffe den DIN-Tinten, wenn möglich, in Struktur und Aufbau chemisch ähnlich. Sie stellen damit also einen Ersatz für die bisher verwendeten Testtinten dar.

Die erzeugte Mischung ist auf den DIN-üblichen Messbereich von mindesten 28 bis 48 mN/m einstellbar und in jedem Verhältnis mit Wasser mischbar. Sie reagiert nicht mit dem Substrat wie z.B. einem Metall oder Kunststoff und greift oder löst keine Kunststoffoberflächen an. Sie ist chemisch stabil und reagiert nicht mit sich selbst oder mit Wasser.

Die Rohstoffe sind ohne Mischungslücke mischbar, da sich sonst die Oberflächenspannung, ähnlich wie bei Tensiden, durch eine erhöhte Konzentration an der Oberfläche sprunghaft ändern könnte.

### Beschreibung bevorzugter Ausführungsbeispiele

Die sich aus den Ansprüchen ergebenden Testtinten dienen zum Auftragen auf ein Werkstück zur Bestimmung von dessen Oberflächeneigenschaften, insbesondere der Oberflächenspannung bzw. Oberflächenenergie des jeweiligen Substrats. Der Oberflächenspannungswert wird durch Mischung aus mindestens zwei Grundkomponenten mit verschiedenen Öberflächenspannungswerten auf einen Wert zwischen diesen Oberftächenspannungswerten einschließlich deren jeweiligen Randwerte eingestellt. Mindestens eine der Grundkomponenten ist ein Stoff, dessen molekulare Struktur von der molekularen Struktur der bisher für Testtinten verwendeten Stoffe Formamid und/oder Ethylenglykolmonoethylether so weit abweicht, dass sich ein noch weitgehend ähnliches statisches und dynamisches Verhalten beim Auftrag auf das Werkstück bei deutlich reduzierter Toxizität einstellt. Diese Tinten bedürfen nach geltendem Chemikaliengesetz und Verordnungen keinerlei Kennzeichnung und stellen somit ein deutlich geringeres Gesundheitsrisiko für den Anwender dar. Den Testtinten werden regelmäßig zur Visualisierung Farbstoffe in geringen Mengen zugesetzt. Diese Farbstoffe können auch kennzeichnungspflichtig sein. Dennoch sich die damit hergestellten Testtinten nach der Gefahrstoffverordnung nicht kennzeichnungspflichtig, wenn der Anteil derartiger kennzeichnungspflichtiger Stoffe kleiner als ein vorgegebener Anteil, nach der GstVO kleiner als 1% ist.

### Erläuterung der einzelnen Rohstoffe

Als erste Grundkomponente mit niedrigem Oberflächenspannungswert wird Dipropylenglykolmonomethylether mit einem Oberflächenspannungswert von 28 mN/m oder Diethylenglykoldiethylether mit einem Oberflächenspannungswert von 26,5 mN/m verwendet. Vorteilhaft ist bei letzerem die niedrige Oberflächenspannung ohne Kennzeichnungspflicht nach GStVO. Da es sich hierbei um Glykoldiether handelt, der damit nicht die gewünschte chemische Verwandtschaft zu dem in der DIN-Norm eingesetzten Glykolmonoether besitzt, ist ein ähnliches Verhalten nicht zu erwarten.

| Substanz | bek. | OFS (mN/m) | Kennzeichnung gem. GStVO |
|---|---|---|---|
| Ethlylenglycolmonoethylether (DIN) | X | 30 | T (toxisch) |
| Methoxypentanol | X | 29,5 | Xi (reizend) |
| Dipropylenglykolmonomethylether | | 28,5 | keine |
| Diethytenglytcoldiethylether | | 26,5 | keine |

Als zweiter Bestandteil mit möglichst hohem Oberflächenspannungswert wird ein Stoff aus der Gruppe der Pyrrole, Pyrrolidine oder Pyrrolidone, vorzugsweise Pyrrolidon (46 mN/m), oder eines ihrer Derivate verwendet. Verwendbar sind aber auch Polyalkohole, vorzugsweise 1,2,3-Propantriol, oder Triethanolamin. Femer sind einsetzbar Stoffe aus der Gruppe der organischen Dinitrile oder Trinitrile, auch Di- oder Tricyanoverbindungen genannt, vorzugsweise Bis-(cyanoethyl)ether, Dicyano-1-Buten oder Glutaronitrile. Verwendbar sind auch Glykole bzw. Diole, ausgenommen Ethylenglykol, oder Diglykole einschließlich Dipropylenglykol und Diethylenglykol (44 mNlm).

| Substanz | OFS (mN/m) | Kennzeichnung nach GStVO |
|---|---|---|
| Formamid | 58 | T (toxisch) |
| Pyrrolidon | 46 | keine |
| Diethylenglykol | 45 | keine |
| Triethanolamin | 45 | keine |
| Glycerin | 65 | keine |
| Glutaronitril | 49 | keine |
| Dicyano-1-Buten | 60 | keine |
| Bis-(cyanoethyl)ether | 47 | keine |
| Triethylenglykol | 46 | keine |
| Tetraethylenglykol | 44 | keine |
| Wasser | 72 | keine |

Die DIN-Nomn sieht vor, dass, wenn sich die Tinten auf der zu prüfenden Oberfläche innerhalb von 2 Sekunden nicht zusammenziehen, die Oberflächenspannung der Oberfläche als die der Tinte anzusehen ist. Da die Geschwindigkeit des Zusammenziehens eine vorwiegend dynamische Eigenschaft ist, werden sich Stoffe mit einer niedrigeren Viskosität schneller zusammenziehen als solche, die eine größere Viskosität besitzen. Damit die Viskosität über alle Mischungsverhältnisse möglichst konstant bleibt, sollten die einzelnen Komponenten untereinander möglichst ähnliche Viskositäten besitzen. Beispielhaft sind die Viskositäten einiger verwendeter Substanzen unten in der Tabelle angegeben. Methoxypentanol und Diethylenglykol besitzen ähnliche Viskositäten von ca. 35 mPa s, so dass Mischungen in etwa ähnliche Werte zeigen. Allerdings sind beide Stoffe deutlich viskoser als die Ausgangsstoffe der DIN-Tinten, so dass sich diese Tinten langsamer als jene zusammenziehen. Dipropylenglykolmonoethylether und Pyrrolidon zeigen etwas unterschiedliche, aber noch im Rahmen liegende Werte der Viskosität.

| Substanz | Viskosität in mPa s (gerundet) | bekannt |
|---|---|---|
| Ethlylenglycolmonoethylether | 2 | X |
| Formamid | 4 | X |
| Methoxypentanol | 36 | |
| Diethylenglykol | 35 | |
| Dipropylenglykolmonomethylether | 4 | |
| Pyrrolidon | 10 | |
| Diethylenglykoldiethylether | 1,5 | |
| Wasser | 1 | |

Die Grundkomponenten werden systematisch von 0% bis 100% eines jeden Stoffes miteinander vermischt. Anschließend wird die Oberflächenspannung mittels Ringwaage ermittelt. Für verschiedene Gemische wurde der Konzentrations/Oberflächenspannungsverlauf ermittelt. Beispielhaft sie hier das Gemisch Dipropylenglykolmonomethylether/Wasser aufgeführt.

| Menge an Dipropylenglykolmonomethylether in % | Menge an Wasser in % | Oberflächenspannung in mN/m |
|---|---|---|
| 4,5 | 95,5 | 30 |
| 18 | 82 | 32 |
| 44 | 56 | 34 |
| 59 | 41 | 36 |
| 67 | 33 | 38 |
| 73 | 27 | 40 |
| 78 | 22 | 42 |
| 82 | 18 | 44 |
| 85 | 15 | 46 |
| 89 | 11 | 48 |
| 92 | 8 | 50 |
| 94 | 6 | 52 |
| 96 | 4 | 54 |
| 98 | 2 | 56 |

Nach diesem Vorbild wurden die Oberflächenspannungen verschiedener Mischungen ermittelt.

Zu Vergleichsuntersuchungen werden auf unterschiedlichen Kunststoffen gleichzeitig DIN-Tinten und die neuentwickelten Tinten aufgetragen. Es wird die Stärke der Benetzung und die Geschwindigkeit des Zusammenziehens beobachtet. Weiterhin wird überprüft, ob die Kunststoffe von den Tinten angegriffen werden.

Grundsätzlich ist es mit dem Wissen um den Konzentrations/Oberflächenspannungswert möglich, Mischungen mit beliebigen gewünschter Oberflächenspannungswerten herzustellen. Allerdings benetzen Testtinten mit demselben Oberflächenspannungswert wie die DIN-Tinten beim Auftrag auf eine Kunststoffoberfläche nicht in derselben Weise wie eine DIN-Tinte. So zeigen z.B. Testtinten, die Wasser als eine Komponente beinhalten, grundsätzlich höhere Oberflächenspannungen als DIN-Tinten mit dem entsprechenden Oberflächenspannungswert.

Die Oberflächenenergie ist das Maß für die Energiemenge, die benötigt wird, um die Oberfläche um ein bestimmtes Maß zu erhöhen. Bei der Benetzung mit einer Flüssigkeit scheinen die Benetzungseigenschaften neben der Oberflächenspannung noch von anderen Eigenschaften abzuhängen. So verhält sich eine Substanz, die nur Hydroxyl-Gruppen als funktionelle Gruppen trägt, nach entsprechenden Beobachtungen anders als eine, die Amino-Gruppen trägt. Hier können neben Dipol-Eigenschaften eventuell auch sterische Einflüsse eine Rolle spielen. Das bedeutet, was von der Theorie her nicht zu erwarten war, dass noch andere Einflussfaktoren als die Oberflächenspannung den Benetzungsgrad der Oberfläche beeinflussen.

Um dem Umstand abzuhelfen, dass die neu entwickelten Testtinten andere Oberflächenspannungswerte als die DIN-Tinten anzeigen, kann bei einem bevorzugten Ausführungsbeispiel auch von der bisherigen Praxis abgewichen werden und statt der Verwendung eines binären Gemischs ein temäres oder auch quartäres Gemisch gewählt werden.

Soweit bekannt, wurde bisher noch kein temäres oder quartäres Gemisch zur Messung der Oberflächenspannung eingesetzt. Dabei wird bewusst der Nachteil in Kauf genommen, dass bei Einsatz eines temären oder gar quartären Gemischs die Variationsmöglichkeiten einer Mischung zur Erzielung einer bestimmten Oberflächenspannung fast unendlich groß werden.

Als Beispiel sei das folgenden Gemisch genannt, wobei das Verhältnis Glycerin zu Wasser 65% zu 35% beträgt:

| Menge an Methylpyrrolidon in % | Menge an Glycerin/Wasser in % | Oberflächenspannung in mN/m |
|---|---|---|
| 97 | 3 | 46 |
| 85 | 15 | 48 |
| 71 | 29 | 50 |
| 61 | 39 | 52 |
| 50 | 50 | 54 |
| 40 | 60 | 56 |
| 32 | 68 | 58 |
| 14 | 76 | 60 |

Nachfolgende temäre Mischung als weiteres Beispiel zeigt in Bezug auf den Vergleich mit den DIN-Tinten sehr gute Ergebnisse. Sie weist nahezu identisches oder ähnliches Vefiaiten wie die DIN-Tinten in Bezug auf Geschwindigkeit des Zusammenziehens und der Benetzungsstärke auf. Das Verhältnis Glycerin zu Wasser beträgt 85% zu 15% :

| Menge an Dipropylenglykolmonoethylether in % | Menge an Glycerin/Wasser in % | Oberflächenspannung in mN/m |
|---|---|---|
| 7 | 93 | 30 |
| 20 | 80 | 32 |
| 45 | 55 | 34 |

| Menge an Dipropylengly-Kolmonoethylether in % | Menge an Glyce-rin/Wasser in % | Oberflächenspan-nung in mN/m |
|---|---|---|
| 66 | 34 | 36 |
| 75 | 25 | 38 |
| 82 | 18 | 40 |
| 87 | 13 | 42 |
| 91 | 9 | 44 |
| 94 | 6 | 46 |
| 98 | 2 | 48 |

Nachfolgende quartäre Mischung zeigt bei gleichen Werten mit den DIN-Tinten vergleichbare Oberflächenenergiewerte bei den meisten handelsüblichen Kunststoffen an. Sie eignet sich hervorragend bei einem Temperaturbereich von ca. 16 bis 25 °C.

| Menge an Dipropylenglykolmonomethylether in % | Menge an N-Methylpyr ro-lidon in % | Menge an Glycerin in % | Menge an Wasser in % | Oberflächenspannung in mN/m |
|---|---|---|---|---|
| 0 | 70 | 4,5 | 25,5 | 51 |
| 7,4 | 64,8 | 4,2 | 23,6 | 44 |
| 20 | 56 | 3,6 | 20,4 | 38 |
| 40 | 42 | 2,7 | 15,3 | 36 |
| 50 | 35 | 2,3 | 12,7 | 35 |
| 60 | 28 | 1,8 | 10,2 | 33 |
| 80 | 14 | 0,9 | 5,1 | 31 |
| 93 | 5,1 | 0,3 | 1,9 | 30 |
| 100 | 0 | 0 | 0 | 29 |

Bei den in den Tabellen genannten Prozentwerten handelt es sich durchwegs um Volumenprozent.

Praxisversuche zeigen, dass es unter der Vielzahl der temären und quartären Gemische Mischungen gibt, die in der Anwendung ein zu den DIN-Tinten vergleichbares Verhalten zeigen. Insbesondere ließen sich Testtinten für Obertlächenspannungsmessungen von mehr als 44 mN/m kaum noch in Form von binären Mischungen herstellen.

Neben den genannten Testtinten mit 2-4 Komponenten sind durchaus auch Testtinten möglich, die mehr als 4, insbesondere 5, Komponenten aufweisen.

Weitere Beispiele für mögliche Testtinten sind:
1. a) Methoxypentanol/Diethylenglykol (30 - 44 mN/m)
1. b) Diethylenglykol/Wasser (45 - 56 mN/m)
   Es handelt sich hierbei um Tinten für Stifte. Sie zeigen bis 48 mN/m vergleichbare Werte wie die DIN-Tinten. Das Zusammenziehen des Flüssigkeitsfilms ist deutlich langsamer.
2. Dipropylenglykolmonomethylether/Diethylenglykol (28 - 44 mN/m)
3. a) Dipropylenglykolmonomethylether/Pyrrolidon (28 - 46 mN/m)
3. b) Pyrrolidon/Wasser (46 - 56 mN/m)

Ein Vergleich der Mischungen. mit den DIN-Tinten zeigt für 3. a) (Dipropylenglykolmonomethylether/Pyrrolidon) die größten Übereinstimmungen für die Benetzung und auch für die Geschwindigkeit des Zusammenziehens. Die Geschwindigkeit des Zusammenziehens wird neben der Oberflächenspannung noch von der Viskosität der Flüssigkeiten bestimmt. Die Tinten der Nr. 3 zeigen ab Werten von ca. 38 mN/m bei Versuchen mit Kunststoffen aus PS und ABS ein Anlösen der Oberflächen. Mit einem Wassergehalt ab ca. 20 % im Pyrrolidonanteil findet jedoch kein Anlösen der Oberfläche mehr statt.

Ein weiterer Nachteil der Tinte Nr. 3 ist der hohe Schmelzpunkt der Tinten. Hier wurde eine temäre Mischung von Dipropylenglykolmonomethylether/ Pyrrolidon/Diethylenglykol gewählt. Tinten größer 48 mN/m, die aus Pyrrolidon und Wasser dargestellt sind, zeigen zu hohe Werte im Vergleich zu den DIN-Tinten an. Wird jedoch ein Triol wie z.B. Glycerin zugegeben, ergeben sich brauchbare Werte.

Als Grundkomponenten kommen auch die folgenden Stoffe in Betracht:
beta-Propiolacton,
Hydracrylonitril,
1,3-Propylen-Glykol,
N-Methyl-2-Pyrrolidon,
Methyl-Sulfolan,
cis-Dicyano-1-Buten,
trans-Dicyano-1-Buten,

Bis(Cyanoethyl)ether,
Triethylenglykol,
Triethanolamin,
Tetraethylenglykol

Die neu entwickelten Testtinten zeigen innerhalb der üblichen Verarbeitungszeiten von mehreren Monaten keine Veränderung.

## Patentansprüche

1. Verwendung einer Tinte zur Herstellung einer Serie mehrerer Tinten mit definierter und ansteigender Abstufung der Oberflächenspannung, wobei die Tinte aus mindestens zwei Komponenten unterschiedlicher Oberflächenspannung zum Auftragen auf Werkstücke zur Bestimmung von deren Oberflächeneigenschaften, insbesondere zur Messung der Oberflächenenergie von Festkörpern, vorgesehen ist und im Wesentlichen frei von kennzeichnungspflichtigen Stoffen ist, **dadurch gekennzeichnet, dass** eine erste Komponente der Testtinte mit niedrigem Oberflächenspannungswert ein Dipropylenglykolmonomethylether oder ein Diethylenglykoldiethylether ist.

2. Verwendung nach Anspruch 1, **dadurch gekennzeichnet, dass** die Testtinte mindestens drei, vorzugsweise mindestens vier Komponenten aufweist.

3. Verwendung nach einem der Ansprüche 1 oder 2, **dadurch gekennzeichnet, dass** die Testtinte im wesentlichen lückenlos mindestens auf einen Messbereich von 28 bis 56 mN/m, insbesondere von 28 bis 48 mN/m einstellbar ist.

4. Verwendung nach einem der vorhergehenden Ansprüche, **dadurch gekennzeichnet, dass** eine weitere, insbesondere zweite, Komponente mindestens ein Stoff aus der Gruppe der Pyrrole, Pyrrolidine oder Pyrrolidone, vorzugsweise N-Methyl-pyrrolidon, oder ein Stoff aus der Gruppe der organischen Dinitrile oder Trinitrile, vorzugsweise Bis-(Cyanoethyl)ether), Dicyano-1-Buten oder ein Glutaronitril ist.

5. Verwendung nach einem der vorhergehenden Ansprüche, **dadurch gekennzeichnet, dass** sie als erste Komponente mindestens einen Polyglycolether, insbesondere Dipropylenglykolmonomethylether, und als zweite Komponente mindestens ein Pyrrolidon, insbesondere N-Methyl-pyrrolidon enthält.

6. Verwendung nach einem der vorhergehenden Ansprüche, **dadurch gekennzeichnet, dass** eine weitere, insbesondere dritte, Komponente mindestens ein Polyalkohol, ausgenommen Ethylenglycol, vorzugsweise Glycerin oder Diethylenglycol oder Triethanolamin, ist.

7. Verwendung nach einem der vorhergehenden Ansprüchen, **dadurch gekennzeichnet, dass** eine weitere, insbesondere dritte, Komponente Triethanolamin ist.

8. Verwendung nach einem der vorhergehenden Ansprüchen, **dadurch gekennzeichnet, dass** eine weitere, insbesondere vierte, Komponente Wasser ist.

9. Verwendung nach einem der vorhergehenden Ansprüchen, **dadurch gekennzeichnet, dass** eine erste Komponente ein Diglykolether, eine zweite Komponente N-Methylpyrrolidon, eine dritte Komponente Glycerin und eine vierte Komponente Wasser ist.

10. Verwendung nach einem der vorhergehenden Ansprüchen, **dadurch gekennzeichnet, dass** sie wenigstens einen der folgenden Stoffe enthält:
beta-Propiolacton,
Hydracrylonitril,
1,3-Propylen-Glykol,
N-Methyl-2-Pyrrolidon,
Methyl-Sulfolan,
Triethylenglykol,
Tetraethylenglykol.

## Claims

1. Use of an ink for producing a series of several inks having a defined and rising gradation of the surface tension, the ink being formed from at least two components of different surface tension for applying to workpieces to determine the surface properties thereof, more especially to measure the surface energy of solid-state bodies, and being substantially free of substances which are subject to being marked, **characterised in that** a first component of the test ink with a low surface tension value is a dipropylene glycol monomethyl ether or a diethylene glycol diethyl ether.

2. Use according to claim 1, **characterised in that** the test ink has at least three, preferably at least four, components.

3. Use according to one of claims 1 or 2, **characterised in that** the test ink can be set in a substantially gap-free manner at least to a measuring range of 28 to 56 mN/m, more especially 28 to 48 mN/m.

4. Use according to one of the preceding claims, **characterised in that** an additional, more especially second, component is at least one substance from the group of pyrrols, pyrrolidines or pyrrolidones, preferably N-methyl pyrrolidone, or one substance from the group of organic dinitriles or trinitriles, preferably bis-(cyanoethyl ether), dicyano-1-butene or a glutaronitrile.

5. Use according to one of the preceding claims, **characterised in that** it contains as the first component at least one polyglycol ether, more especially dipropylene glycol monomethyl ether, and as the second component at least one pyrrolidone, more especially N-methylpyrrolidone.

6. Use according to one of the preceding claims, **characterised in that** an additional, more especially third, component is at least one polyalcohol, with the exception of ethylene glycol, preferably glycerin or diethylene glycol or triethanol amine.

7. Use according to one of the preceding claims, **characterised in that** an additional, more especially third, component is triethanol amine.

8. Use according to one of the preceding claims, **characterised in that** an additional, more especially fourth, component is water.

9. Use according to one of the preceding claims, **characterised in that** a first component is a diglycol ether, a second component is N-methyl pyrrolidone, a third component is glycerin and a fourth component is water.

10. Use according to one of the preceding claims, **characterised in that** it contains at least one of the following substances:
beta-propiolactone,
hydracrylonitrile,
1,3-propylene-glycol,
n-methyl-2-pyrrolidone,
methyl-sulpholane,
triethylene glycol,
tetraethylene glycol

## Revendications

1. Utilisation d'une encre pour la fabrication d'une série de plusieurs encres, présentant une classe définie et croissante de tension de surface, dans laquelle l'encre, présentant au moins deux composants ayant une tension de surface différente, destinée à être appliquée sur des pièces usinées, est prévue en vue de déterminer ses propriétés de surface, notamment pour mesurer l'énergie de surface des solides et elle est essentiellement exempte de toute substance soumise à des mentions obligatoires, **caractérisée en ce qu'**un premier composant de l'encre de test présentant une faible valeur de tension de surface est un éther monométhylique de dipropylène glycol ou un éther diéthylique de diéthylène glycol.

2. Utilisation selon la revendication 1, **caractérisée en ce que** l'encre de test présente au moins trois, de préférence au moins quatre composants.

3. Utilisation selon l'une quelconque des revendications 1 ou 2, **caractérisée en ce que** l'encre de test peut être ajustée, essentiellement sans carence, au moins dans une plage de mesure de 28 à 56 mN/m, notamment de 28 à 48 mN/m.

4. Utilisation selon l'une quelconque des revendications précédentes, **caractérisée en ce qu'**un autre composant, notamment un deuxième, est au moins une substance choisie dans le groupe des pyrroles, pyrrolidines ou pyrrolidones, de préférence de la N-méthylpyrrolidone, ou une substance choisie dans le groupe des dinitriles ou trinitiles organiques, de préférence l'éther bis-(cyano)éthylique, le dicyano-1-butène ou un glutaronitrile.

5. Utilisation selon l'une quelconque des revendications précédentes, **caractérisée en ce qu'**elle contient comme premier composant au moins un éther de polyglycol, notamment un éther monométhylique de dipropylène glycol, et comme deuxième composant au moins une pyrrolidone, notamment une N-méthyl-pyrrolidone.

6. Utilisation selon l'une quelconque des revendications précédentes, **caractérisée en ce qu'**un autre composant, notamment un troisième, est au moins un polyalcool à l'exception de l'éthylène glycol, de préférence une glycérine ou du diéthylène glycol ou de la triéthanolamine.

7. Utilisation selon l'une quelconque des revendications précédentes, **caractérisée en ce qu'**un autre, notamment un troisième composant est la triéthanolamine.

8. Utilisation selon l'une quelconque des revendications précédentes, **caractérisée en ce qu'**un autre, notamment un quatrième composant est l'eau.

9. Utilisation selon l'une quelconque des revendications précédentes, **caractérisée en ce qu'**un premier composant est un éther de diglycol, un deuxième composant une N-méthylpyrrolidone, un troisième composant, une glycérine, et un quatrième composant l'eau.

10. Utilisation selon l'une quelconque des revendications précédentes, **caractérisée en ce qu'**elle contient au moins l'une des substances suivantes :
bêta-propiolactone,
hydracrylonitrile,
1,3-propylène-glycol,
N-méthyl-2-pyrrolidone,
méthylsulfolane,
triéthylène glycol,
tétraéthylène glycol.
